# EUROPEAN PATENT APPLICATION

(11) **EP 4 316 250 A1**
(43) Date of publication of application: **07.02.2024**
(21) Application number: 22780810.2
(22) Date of filing: 28.03.2022
(51) Int. Cl.: A23D 9/00

(54) **METHOD FOR PRODUCING OIL-AND-FAT COMPOSITION FOR INFANT FORMULA**

(30) Priority: 29.03.2021 JP 2021056131
(71) Applicant: Fuji Oil Holdings Inc., Izumisano-shi, Osaka 598-8540 (JP)
(72) Inventor: HORI, Katsuhito, Izumisano-shi, Osaka 598-8540 (JP)
(74) Representative: Becker, Eberhard
(86) International application number: PCT/JP2022/015176
(87) International publication number: WO 2022/210599

(57) **Abstract**

The present invention addresses the problem of providing an oil-and-fat composition for infant formula, the oil-and-fat composition having a reduced content of glycidol and a glycidol fatty acid ester. A method for producing an oil-and-fat composition for infant formula, which is obtained by blending a specific oil-and-fat species with an oil-and-fat, comprises a step of contact treating with an acid during a bleaching step.

## Description

### Technical Field

The present invention relates to a method for producing an oil and/or fat composition for infant formula.

### Background Art

Glycidol is a compound in which an epoxy ring is formed at the 2- and 3-positions of a glycerol backbone. In recent years, glycidol fatty acid esters in which fatty acids are ester-bound to glycidol are detected from a plurality of edible oils and/or fats. Among oils and/or fats with confirmed presence of glycidol fatty acid esters, palm oils and/or fats and refined edible oils and/or fats made from palm oils and/or fats in particular are reported to have relatively high content of glycidol fatty acid esters (Non-Patent Literature 1).

There are reports saying that when glycidol fatty acid esters are ingested into the body, the glycidol fatty acid esters are hydrolyzed by the action of lipases present in the body, resulting in the generation of glycidol. There is also a literature that points out the harmfulness of glycidol (Non-Patent Literature 2).

In view of the above background, it is desirable to develop an oil and/or fat composition for infant formula with a reduced content of glycidol and glycidol fatty acid esters.

Patent Documents 1 to 3 disclose methods for reducing the content of glycidol and glycidol fatty acid esters. Glycidol and glycidol fatty acid esters tend to be generated during deodorization treatment. In response to that, Patent Document 1 discloses a method of performing a low-temperature deodorization treatment of a glyceride composition at 190 to 230°C.

### Prior Art Documents

### Patent Documents

Patent Document 1: JP 2011-147436 A
Patent Document 2: WO 2019/038320
Patent Document 3: WO 2019/027315

### Non-Patent Literatures

Non-Patent Literature 1: Results of Field Survey on the Contents of 3-MCPD Fatty Acid Esters and Glycidol Fatty Acid Esters in Foods (2012 and 2013), Food Safety and Consumer Affairs Bureau, Ministry of Agriculture, Forestry and Fisheries, December 17, 2014
Non-Patent Literature 2: IARC, IARC Monogr, Eval, Carcinog, Risks Hum., 77, 469-486, 2000

### Disclosure of the Invention

### Technical Problem

Patent Documents 2 and 3 are processes for refining refined, bleached, and deodorized palm oil (RBDPO) from crude palm oil (CPO), and do not describe refining from refined, bleached, and deodorized palm oil (RBDPO).

It is found that the method of Patent Document 1 results in insufficient decrease in the acid value of refined oils after deodorization and an oily flavor of refined oils.

An object of the present invention is to solve the problems mentioned above and to provide an oil and/or fat composition for infant formula which has good flavor and color and in which the content of glycidol and glycidol fatty acid esters is reduced to a satisfactory level.

### Solution to Problem

As a result of intensive studies, the present inventors found the following, and thereby completed the present invention: subjecting a raw material oil and/or fat having up to a certain concentration of 3-MCPD (3-chloro-1,2-propanediol) to a bleaching operation that includes a contact treatment using an acid and then blending the resulting oil and/or fat with a specific oil and/or fat species can result in a quality suitable for oils or fats for infant formula and a reduced content of glycidol and glycidol fatty acid esters.

That is, the present invention relates to
(1) A method for producing an oil and/or fat composition for infant formula, the method including blending an oil and/or fat a, an oil and/or fat b, and an oil and/or fat c described below:
   oil and/or fat a:
   at least one type of oil and/or fat that satisfies quality of the oil and/or fat a described below and that is produced by subjecting a raw material oil and/or fat described below to bleaching and deodorization, wherein in the bleaching and deodorization, a bleaching operation includes adding an aqueous solution of an acid, and a deodorization treatment is performed at 230°C to 260°C;
   raw material oil and/or fat:
   an oil and/or fat that has a 3-MCPD concentration of 0.5 mg/kg or less and that is at least one type of oil and/or fat selected from a refined, bleached, and deodorized palm oil (RBDPO) and a palm-based oil and/or fat using a refined, bleached, and deodorized palm oil (RBDPO) as a raw material
   quality of oil and/or fat a:
      a content of glycidol and glycidol fatty acid esters of 0.2 mg/kg or less in terms of glycidol equivalent
      oil and/or fat b: at least one type of oil and/or fat selected from the group consisting of palm kernel oil or a fractionated oil thereof, and coconut oil;
      oil and/or fat c: at least one type of oil and/or fat selected from the group consisting of soybean oil, rapeseed oil, corn oil, sunflower oil, safflower oil, perilla oil, linseed oil, high oleic sunflower oil, high oleic rapeseed oil, and high oleic safflower oil;
(2) The method for producing an oil and/or fat composition for infant formula according to (1), wherein a blended amount of the oil and/or fat a is from 30 wt.% to 50 wt.%, a blended amount of the oil and/or fat b is from 20 wt.% to 40 wt.%, and a blended amount of the oil and/or fat c is from 10 wt.% to 30 wt.%;
(3) The method for producing an oil and/or fat composition for infant formula according to (1), wherein the composition has a 3-MCPD concentration of 0.4 mg/kg or less and a content of glycidol and glycidol fatty acid esters of 0.2 mg/kg or less in terms of glycidol equivalent;
(4) The method for producing an oil and/or fat composition for infant formula according to (2), wherein the composition has a 3-MCPD concentration of 0.4 mg/kg or less and a content of glycidol and glycidol fatty acid esters of 0.2 mg/kg or less in terms of glycidol equivalent.

### Advantageous Effects of Invention

The present invention can provide an oil and/or fat composition for infant formula having a reduced content of glycidol and glycidol fatty acid esters.

In a preferred embodiment, the 3-MCPD concentration in the resulting oil and/or fat composition for infant formula can be reduced to 0.4 mg/kg or less, and the content of glycidol and glycidol fatty acid esters in the resulting oil and/or fat composition for infant formula can be reduced to 0.2 mg/kg or less in terms of glycidol equivalent.

### Description of Embodiments

The present invention will be described in detail below.

An oil and/or fat composition for infant formula according to an embodiment of the present invention can be produced by blending an oil and/or fat a, an oil and/or fat b, and an oil and/or fat c.

The raw material oil and/or fat that can be used as the oil and/or fat a needs to be a palm-based oil and/or fat having a 3-MCPD concentration of 0.5 mg/kg or less. When the raw material oil and/or fat has a 3-MCPD concentration of greater than 0.5 mg/kg, the effect of the present invention may not be achieved.

The production process of palm oil includes refining from crude palm oil (CPO) and refining from refined, bleached, and deodorized palm oil (RBDPO). The refining from crude palm oil (CPO) includes squeezing the pulp of oil palm to obtain crude palm oil (CPO) and subjecting the resulting crude palm oil (CPO) to refining steps such as degumming, deacidification, bleaching, deodorization, and dewaxing to produce refined, bleached, and deodorized palm oil (RBDPO). The refining from refined, bleached, and deodorized palm oil (RBDPO) includes further subjecting the refined, bleached, and deodorized palm oil (RBDPO) to refining such as bleaching and deodorization.

The raw material oil and/or fat for the oil and/or fat a is at least one type of oil and/or fat selected from a refined, bleached, and deodorized palm oil (RBDPO) and a palm-based oil and/or fat using a refined, bleached, and deodorized palm oil (RBDPO) as a raw material.

In an embodiment of the present invention, the palm-based oil and/or fat can be used includes a refined, bleached, and deodorized palm oil and a fractionated oil obtained using a refined, bleached, and deodorized palm oil as a raw material. Examples of the fractionated oil obtained using a refined, bleached, and deodorized palm oil as a raw material include palm olein, palm super olein, palm stearin, and a palm mid-fraction.

In the production process of the oil and/or fat a, bleaching and deodorization includes the entire series of steps in the production process, and is not limited to the production steps in a reaction device such as a bleaching tank or a deodorization column. The bleaching and deodorization is composed of a bleaching operation and a deodorization operation.

In the production process of the oil and/or fat a, the bleaching operation includes a series of steps, including bleaching preparation, bleaching, and, when necessary after bleaching, bleaching filtration. During bleaching preparation, the raw material oil and/or fat is transferred to a reactor (bleaching tank) where bleaching is performed. During bleaching, a processing aid such as bleaching clay, and the like are placed into the bleaching tank, and the bleaching tank is heated under reduced pressure. During bleaching filtration, cooling is performed and the clay is filtered out.

In the production process of the oil and/or fat a, the deodorization operation includes a series of steps, including deodorization preparation, deodorization, and post-deodorization treatment. During deodorization preparation, bleached oil after bleaching filtration is transferred to a deodorization vessel (deodorization column). During deodorization, deodorization is performed in the deodorization column. During post-deodorization treatment, cooling is performed, an antioxidant is added, etc.

The method for producing an oil and/or fat composition for infant formula according to an embodiment of the present invention includes adding an aqueous solution of an acid during the bleaching operation in the production steps of the oil and/or fat a. The refining of crude palm oil (CPO) according to an embodiment of the present invention preferably includes the adding an aqueous solution of an acid immediately before the bleaching in the bleaching operation. The phrase "includes adding an aqueous solution of an acid immediately before bleaching in the bleaching operation" means that no other step is included between the addition of an aqueous solution of an acid and the bleaching. Examples of the other steps include alkali deacidification, water washing, dehydration, transesterification reaction, and deodorization.

Examples of the acid used in the production process of the oil and/or fat a include an organic acid and/or an inorganic acid. Examples of the organic acid include at least one organic acid or derivative thereof selected from the group consisting of ascorbic acid, erythorbic acid, lactic acid, tartaric acid, citric acid, gallic acid, phosphoric acid, malic acid, and salts thereof. The inorganic acid is preferably a phosphoric acid, such as orthophosphoric acid, diphosphoric acid (pyrophosphoric acid), and metaphosphoric acid.

In a preferred embodiment of the production process of the oil and/or fat a, the acid used is an aqueous solution of citric acid and/or phosphoric acid. The concentration of the aqueous solution of citric acid and/or phosphoric acid to be added is preferably from 1 to 85 wt.%, and the amount of the aqueous solution of citric acid and/or phosphoric acid to be added is preferably from 0.01 to 10 wt.%. The conditions are not specified as long as the above ranges are satisfied. However, among the ranges, the amount of the aqueous solution of citric acid and/or phosphoric acid to be added is more preferably from 0.01 to 5 wt.%, even more preferably from 0.05 to 1 wt.%, and further preferably from 0.05 to 0.5 wt.%. When the amount of the aqueous solution of citric acid and/or phosphoric acid to be added is less than 0.01 wt.%, the amount of glycidol and glycidol fatty acid esters may not be sufficiently reduced. Meanwhile, when the amount of the aqueous solution of citric acid and/or phosphoric acid to be added exceeds 10 wt.%, the burden on the equipment may be increased.

In the production process of the oil and/or fat a, deodorization is desirably performed at a deodorization temperature of from 230 to 260°C, a vacuum degree of from 100 to 800 Pa, and an amount of steam used of from 0.5 to 5 wt.%. When the deodorization temperature is lower than 230°C, the flavor and color of the resulting deodorized edible oil and/or fat may deteriorate, which is not preferable. When the deodorization temperature exceeds 260°C, the content of glycidol and glycidol fatty acid esters may be increased, which is not preferable. The vacuum degree is more preferably from 200 to 800 Pa, and even more preferably from 200 to 700 Pa. When the vacuum degree exceeds 800 Pa, the flavor of deodorized edible oil and/or fat may deteriorate, which is not preferable. Further, when the amount of steam used is less than 0.5 wt.%, the flavor of the resulting deodorized edible oil and/or fat also may deteriorate, which is not preferable. Further, when the amount of steam used exceeds 5 wt.%, the burden on the equipment may be increased, which is not preferable. The deodorization time is preferably from 30 to 120 minutes, and particularly preferably from 60 to 90 minutes. When the deodorization time is less than 30 minutes, the flavor of deodorized edible oil and/or fat may deteriorate, which is not preferable. When the deodorization time exceeds 120 minutes, the content of glycidol and glycidol fatty acid esters may be increased, which is not preferable.

Examples of a deodorization device used in the production process of the oil and/or fat a include a reduced-pressure steam distillation device, and the deodorization may be performed in a batch type, a semi-continuous type, or a continuous type device. When the amount of oil and/or fat to be treated is small, a batch type device is preferable; when the amount of the oil and/or fat to be treated is large, a semi-continuous type or continuous type device is preferable.

The semi-continuous type device to be used may be, for example, a Girdler deodorizer composed of a deodorization column equipped with several trays. The treatment performed using this device is as follows. An oil and/or fat is supplied from the upper part of the device and brought into contact with steam on a tray for an appropriate period of time. Then, the oil and/or fat is descended to the tray below, and after an interval, moved to the next tray below, and so on. The continuous type device to be used may be, for example, a thin film deodorizing device capable of bringing a thin film of oil and/or fat into contact with steam. The semi-continuous type device is preferably from the perspective of the ability to control the temperature and the amount of steam used.

The oil and/or fat a obtained under the conditions mentioned above are at least one type of oil and/or fat satisfying the following quality of oil and/or fat a.

Quality of oil and/or fat a:
a content of glycidol and glycidol fatty acid esters of 0.2 mg/kg or less in terms of glycidol equivalent

The oil and/or fat b is at least one type of oil and/or fat selected from the group consisting of palm kernel oil or a fractionated oil thereof, and coconut oil.

The oil and/or fat c is at least one type of oil and/or fat selected from the group consisting of soybean oil, rapeseed oil, corn oil, sunflower oil, safflower oil, perilla oil, linseed oil, high oleic sunflower oil, high oleic rapeseed oil, and high oleic safflower oil.

In the oil and/or fat composition for infant formula according to an embodiment of the present invention, a blended amount of the oil and/or fat a is preferably from 30 wt.% to 50 wt.%, a blended amount of the oil and/or fat b is preferably from 20 wt.% to 40 wt.%, and a blended amount of the oil and/or fat c is preferably from 10 wt.% to 30 wt.%. Producing oils or fats for infant formula at the blending ratio mentioned above can result in a fatty acid composition close to the fatty acid composition of breast milk, which is required for oils or fats for infant formula.

In an embodiment of the present invention, the content of glycidol and glycidol fatty acid esters is measured by the following method.

0.3 mL of isooctane is added to 100 mg of an oil and/or fat sample to dissolve the oil and/or fat sample. 3 mL of sodium bromide solution containing 90 U/mL lipase is added to a test tube, and the test tube is shaken on a shaker for 30 minutes. The test tube is heated at 80°C for 10 minutes, and then is allowed to be cooled or water-cooled to room temperature. 50 µL of 2.0 µg/mL internal standard mixed solution and 3 mL of hexane are added to the test tube, and the test tube is capped. The test tube is stirred with a vortex mixer. After centrifuge, the aqueous layer is transferred to a new test tube using a Pasteur pipet. 3 mL of hexane is added to the test tube to which the aqueous layer has been transferred, and the test tube is capped. The test tube is stirred with a vortex mixer. After centrifugation, the organic layer is removed. 20 µL of phenylboronic acid solution and 3 mL of hexane are added to the test tube, and the test tube is capped. The test tube is shaken on a shaker for 10 minutes. The organic layer is transferred to a new test tube using a Pasteur pipet. The organic layer in the new test tube is concentrated to 0.5 to 0.8 mL under nitrogen, and then analyzed by GC-MS.

Note that, in the GC-MS, molecular ion peaks m/z 147 and m/z 150 are used in the quantification.

In a preferred embodiment, the oil and/or fat composition for infant formula according to the present invention has a 3-MCPD concentration of 0.4 mg/kg or less and a content of glycidol and glycidol fatty acid esters of 0.2 mg/kg or less in terms of glycidol equivalent.

### Examples

The present invention will be described in more details using examples presented below. Note that in the examples, "%" indicates weight basis.

The refined, bleached, and deodorized palm oil used was a refined, bleached, and deodorized palm oil (RBDPO) obtained by subjecting crude palm oil (CPO) to degumming with an aqueous solution of phosphoric acid, bleaching, and deodorization.

aE1 to aCE4 were prepared as the oil and/or fat a used in each of Examples and Comparative Examples.

### aE1

A refined, bleached, and deodorized palm oil (RBDPO) having a 3-MCPD concentration of 0.22 mg/kg was subjected to bleaching-deodorization. A 50% aqueous solution of citric acid was added to the refined, bleached, and deodorized palm oil serving as a raw material in an amount of 0.1 wt.% with respect to the weight of the oil and/or fat. Immediately afterwards, activated clay was added in an amount of 1.5 wt.% with respect to the weight of the oil and/or fat, and the mixture was subjected to a bleaching treatment for 10 minutes under the conditions of 110°C and 1330 Pa while stirring. The oil and/or fat from which activated clay was removed after completion of bleaching was subjected to a deodorization treatment for 90 minutes under the conditions of 250°C, 266 Pa, and an amount of steam used of 3 wt.%.

### aE2

A refined, bleached, and deodorized palm oil (RBDPO) having a 3-MCPD concentration of 0.19 mg/kg was subjected to bleaching-deodorization. A 50% aqueous solution of citric acid was added to the refined, bleached, and deodorized palm oil serving as a raw material in an amount of 0.1 wt.% with respect to the weight of the oil and/or fat. Immediately afterwards, activated clay was added in an amount of 1.5 wt.% with respect to the weight of the oil and/or fat, and the mixture was subjected to a bleaching treatment for 10 minutes under the conditions of 110°C and 1330 Pa while stirring. The oil and/or fat from which activated clay was removed after completion of bleaching was subjected to a deodorization treatment for 90 minutes under the conditions of 230°C, 266 Pa, and an amount of steam used of 3 wt.%.

### aCE1

A refined, bleached, and deodorized palm oil (RBDPO) having a 3-MCPD concentration of 0.20 mg/kg was subjected to bleaching-deodorization. Activated clay was added to the refined, bleached, and deodorized palm oil serving as a raw material in an amount of 1.5 wt.% with respect to the weight of the oil and/or fat, and the mixture was subjected to a bleaching treatment for 10 minutes under the conditions of 110°C and 1330 Pa. The oil and/or fat from which activated clay was removed after completion of bleaching was subjected to a deodorization treatment for 90 minutes under the conditions of 230°C, 266 Pa, and an amount of steam used of 3 wt.%.

### aCE2

A refined, bleached, and deodorized palm oil (RBDPO) having a 3-MCPD concentration of 0.24 mg/kg was subjected to bleaching-deodorization. A 50% aqueous solution of citric acid was added to the refined, bleached, and deodorized palm oil serving as a raw material in an amount of 0.1 wt.% with respect to the weight of the oil and/or fat. Immediately afterwards, activated clay was added in an amount of 1.5 wt.% with respect to the weight of the oil and/or fat, and the mixture was subjected to a bleaching treatment for 10 minutes under the conditions of 110°C and 1330 Pa while stirring. The oil and/or fat from which activated clay was removed after completion of bleaching was subjected to a deodorization treatment for 90 minutes under the conditions of 265°C, 266 Pa, and an amount of steam used of 3 wt.%.

### aCE3

A refined, bleached, and deodorized palm oil (RBDPO) having a 3-MCPD concentration of 1.38 mg/kg was subjected to bleaching-deodorization. A 50% aqueous solution of citric acid was added to the refined, bleached, and deodorized palm oil serving as a raw material in an amount of 0.1 wt.% with respect to the weight of the oil and/or fat. Immediately afterwards, activated clay was added in an amount of 1.5 wt.% with respect to the weight of the oil and/or fat, and the mixture was subjected to a bleaching treatment for 10 minutes under the conditions of 110°C and 1330 Pa while stirring. The oil and/or fat from which activated clay was removed after completion of bleaching was subjected to a deodorization treatment for 90 minutes under the conditions of 230°C, 266 Pa, and an amount of steam used of 3 wt.%.

### aCE4

A refined, bleached, and deodorized palm oil (RBDPO) having a 3-MCPD concentration of 0.21 mg/kg was subjected to bleaching-deodorization. Activated clay was added in an amount of 1.5 wt.% with respect to the weight of the oil and/or fat, and the mixture was subjected to a bleaching treatment for 10 minutes under the conditions of 110°C and 1330 Pa while stirring. Immediately after bleaching was completed, the mixture was subjected to a deodorization treatment for 90 minutes under the conditions of 210°C, 266 Pa, and an amount of steam used of 3 wt.%.

### Examples 1 and 2 and Comparative Examples 1 to 4

The oils and/or fats a prepared (aE1 to aCE4) were each mixed with the oil and/or fat b and the oil and/or fat c, and oil and/or fat compositions for infant formula were obtained. Palm kernel olein was used as the oil and/or fat b, and soybean oil was used as the oil and/or fat c. The mixing ratio of each oil and/or fat was as follows: oil and/or fat a:oil and/or fat b:oil and/or fat c = 40:35:25.

Table 1 presents the analysis results and flavor evaluation results of the oils or fats obtained in Examples 1 to 2 and Comparative Examples 1 to 4. The flavor was evaluated by multiple people. The best flavor (no taste and no odor) was given 5 points. The worse the flavor, the lower the score. The scores of flavor in the table are the average values of the scores given by the evaluators. 3 or more points were regarded as "pass", and less than 3 points were regarded as "fail".

**[Table 1]**

| | Oil and/or Fat a | Addition of Acid During Bleaching in Production of Oil and/or Fat a | Deodorization Temperature in Production of Oil and/or Fat a | 3-MCPD Concentration in Raw Material of Oil and/or Fat a | Content in Oil and/or Fat Composition for Infant Formula | | Flavor of Oil and/or Fat Composition for Infant Formula |
|---|---|---|---|---|---|---|---|
| | | | | | 3-MCPD (mg/kg) | Glycidol Equivalent (mg/k) | |
| Example 1 | aE 1 | Yes | 250 | 0.22 | 0.24 | 0.17 | 4.6 |
| Example 2 | aE2 | Yes | 230 | 0.19 | 0.20 | 0.10 | 3.5 |
| Comparative Example 1 | aCE1 | No | 230 | 0.20 | 0.26 | 0.29 | 3.4 |
| Comparative Example 2 | aCE2 | Yes | 265 | 0.24 | 0.25 | 0.45 | 4.7 |
| Comparative Example 3 | aCE3 | Yes | 230 | 1.38 | 0.62 | 0.55 | 3.5 |
| Comparative Example 4 | aCE4 | No | 210 | 0.21 | 0.15 | 0.16 | 2.6 |

As presented in Table 1, in the examples in which refined, bleached, and deodorized palm oils (RBDPOs) with a concentration of 3-MCPD in the raw material of 0.5 mg/kg or less were used as raw materials, and an aqueous solution of an acid was added during bleaching, oil and/or fat compositions for infant formula having good flavor, a 3-MCPD concentration of 0.4 mg/kg or less, and a content of glycidol and glycidol fatty acid esters reduced to 0.2 mg/kg or less in terms of glycidol equivalent were obtained. The deodorization temperatures of the refined, bleached, and deodorized palm oils (RBDPOs) at this time were from 230 to 260°C.

In Comparative Example 1, an aqueous solution of an acid was not added during bleaching. In this case, the glycidol equivalent was 0.29 mg/kg.

In Comparative Example 2, the deodorization temperature was set to 265°C. In this case, in this case, the glycidol equivalent was 0.45 mg/kg.

In Comparative Example 3, the 3-MCPD concentration in the palm oil serving as a raw material was 0.5 mg/kg or greater. In this case, the 3-MCPD concentration after deodorization was 0.62 mg/kg, and the glycidol equivalent was 0.55 mg/kg.

In Comparative Example 4, the deodorization temperature was set to 210°C. In this case, the flavor was scored as 2.6.

Similar to Patent Documents 2 and 3, the refined, bleached, and deodorized palm oils used in an embodiment of the present invention were refined, bleached, and deodorized palm oils degummed using phosphoric acid. However, in comparative examples that do not satisfy the configuration of the present invention, the content of glycidol and glycidol fatty acid esters could not be reduced.

The above results are summarized in Table 2. An oil and/or fat composition for infant formula having good flavor, a 3-MCPD concentration of 0.4 mg/kg or less, and a content of glycidol and glycidol fatty acid esters reduced to 0.2 mg/kg or less in terms of glycidol equivalent can only be obtained when an aqueous solution of an acid is added during the bleaching operation, a raw material having a 3-MCPD concentration of 0.5 mg/kg or less in the raw material oil is used, and deodorization is performed at a deodorization temperature of from 230 to 260°C.

**[Table 2]**

| | Refining Conditions of Oil and/or Fat a | | | Quality of Oil and/or Fat Composition for Infant Formula | | |
|---|---|---|---|---|---|---|
| | Addition of Aqueous Solution of Acid During Bleaching Operation | Deodorization Temperature of from 230 to 260°C | 3-MCPD Concentration in Raw Material of 0.5 mg/kg or Less | 3-MCPD Concentration of 0.4 mg/kg or Less | Glycidol Equivalent of 0.2 mg/kg or Less | Flavor |
| Examples | ○ | ○ | ○ | ○ | ○ | ○ |
| Comparative Example 1 | × | ○ | ○ | ○ | × | ○ |
| Comparative Example 2 | ○ | × | ○ | ○ | × | ○ |
| Comparative Example 3 | ○ | ○ | × | × | × | ○ |
| Comparative Example 4 | × | × | ○ | ○ | ○ | × |

### Industrial Applicability

According to the present invention, an oil and/or fat composition for infant formula having a reduced content of glycidol and glycidol fatty acid esters can be produced without impairing the flavor.

## Claims

1. A method for producing an oil and/or fat composition for infant formula, the method comprising blending an oil and/or fat a, an oil and/or fat b, and an oil and/or fat c described below:
oil and/or fat a:
at least one type of oil and/or fat that satisfies the quality of the oil and/or fat a described below and that is produced by subjecting a raw material oil and/or fat described below to bleaching and deodorization, wherein in the bleaching and deodorization, a bleaching operation comprises adding an aqueous solution of an acid, and a deodorization treatment is performed at 230°C to 260°C,
raw material oil and/or fat:
an oil and/or fat that has a 3-MCPD concentration of 0.5 mg/kg or less and that is at least one type of oil and/or fat selected from a refined, bleached, and deodorized palm oil (RBDPO), and a palm-based oil and/or fat using a refined, bleached, and deodorized palm oil (RBDPO) as a raw material,
quality of oil and/or fat a:
a content of glycidol and glycidol fatty acid esters of 0.2 mg/kg or less in terms of glycidol equivalent;
oil and/or fat b: at least one type of oil and/or fat selected from the group consisting of palm kernel oil or a fractionated oil thereof, and coconut oil;
oil and/or fat c: at least one type of oil and/or fat selected from the group consisting of soybean oil, rapeseed oil, corn oil, sunflower oil, safflower oil, perilla oil, linseed oil, high oleic sunflower oil, high oleic rapeseed oil, and high oleic safflower oil.

2. The method for producing an oil and/or fat composition for infant formula according to claim 1, wherein a blended amount of the oil and/or fat a is from 30 wt.% to 50 wt.%, a blended amount of the oil and/or fat b is from 20 wt.% to 40 wt.%, and a blended amount of the oil and/or fat c is from 10 wt.% to 30 wt.%.

3. The method for producing an oil and/or fat composition for infant formula according to claim 1, wherein the composition has a 3-MCPD concentration of 0.4 mg/kg or less and a content of glycidol and glycidol fatty acid esters of 0.2 mg/kg or less in terms of glycidol equivalent.

4. The method for producing an oil and/or fat composition for infant formula according to claim 2, wherein the composition has a 3-MCPD concentration of 0.4 mg/kg or less and a content of glycidol and glycidol fatty acid esters of 0.2 mg/kg or less in terms of glycidol equivalent.
